# EUROPÄISCHE PATENTANMELDUNG

(11) **EP 4 053 957 A1**
(43) Veröffentlichungstag der Anmeldung: **07.09.2022**
(21) Anmeldenummer: 22159040.9
(22) Anmeldetag: 25.02.2022
(51) Int. Cl.: H01M 10/04, H01M 10/42

(54) **VERFAHREN ZUR KONTROLLE EINER SIEGELNAHT EINER POUCH-BATTERIEZELLE**

(30) Priorität: 05.03.2021 DE 102021202154
(71) Anmelder: VOLKSWAGEN AG, 38440 Wolfsburg (DE)
(72) Erfinder: KRAKEN, Mathias, 38102 Braunschweig (DE); ZIHRUL, Patrick, 38100 Braunschweig (DE); SCHÖNEMANN, Malte, 38104 Braunschweig (DE); SCHRÖDER, Christian, 38118 Braunschweig (DE); BREUER, Alexander, 29227 Celle (DE)
(74) Vertreter: FDST Patentanwälte

(57) **Zusammenfassung**

Die Erfindung betrifft ein Verfahren zur Kontrolle einer Siegelnaht (14) einer Pouch-Batteriezelle (2). Dabei wird entlang der Siegelnaht (14) mittels eines ersten und optional auch eines zweiten Abstandssensors (22, 24) eine Vergleichsgröße (Sg), die für eine Dicke der Siegelnaht (14) charakteristisch ist, ermittelt, die Vergleichsgröße (Sg) auf für Anomalien der Dicke charakteristische Abweichungen überwacht, und im Fall einer solchen Abweichung eine Warnmeldung ausgegeben.

## Beschreibung

Die Erfindung betrifft ein Verfahren zur Kontrolle einer Siegelnaht einer Pouch-Batteriezelle. Des Weiteren betrifft die Erfindung eine Messvorrichtung zur Durchführung des Verfahrens.

Pouch-Batteriezellen, kurz auch als "Pouch-Zellen" bezeichnet, sind Sekundärzellen, also wieder aufladbare Batteriezellen, die einen Elektrodenstapel aufweisen, der in einem Folienbeutel ("pouch") eingelegt und gemeinsam mit einem flüssigen Elektrolyten in diesem mediendicht "verpackt" ist. Ein Austritt des Elektrolyten führt regelmäßig zum Ausfall der Sekundärzelle, was bei hoher Last im schlimmsten Fall zu einer Kettenreaktion innerhalb eines Batteriemoduls, das mehrere dieser Sekundärzellen beinhaltet, führen kann.

Üblicherweise ist der Folienbeutel aus zwei Folienhalbschalen gebildet, die miteinander versiegelt werden. Meist handelt es sich bei der hierbei eingesetzten Folie um ein Laminat aus einer Aluminiumfolie, die beidseitig mit jeweils wenigstens einer Kunststoffschicht laminiert ist. Das Siegeln erfolgt dabei üblicherweise durch ein thermisches Verschweißen der jeweils zugewandten Kunststoffschichten. Problematisch ist hierbei allerdings eine hinreichend absicherbare Kontrolle der dabei gebildeten Siegelnaht. Optische Verfahren kommen aufgrund der Aluminiumfolie kaum in Frage, da hierbei der optische Zugang zur den zwischen den Aluminiumfolien liegenden Kunststoffschichten nicht möglich ist. Auch die Nutzung von Computertomographie ist wenig interessant, da dies vergleichsweise zeitaufwändig ist und daher kaum inline-fähig.

Aus WO 2020 / 213 846 A1 ist bekannt, dass insbesondere das "Innenleben" des Folienbeutels, d. h. vornehmlich die Elektroden und deren Kontaktfahnen, mittels einer Wirbelstromanalyse untersucht werden. Hier liegt zugrunde, dass eine Unregelmäßigkeit, beispielsweise ein Riss in einer metallischen Schicht zu einer Veränderung des induzierten Wirbelstroms führt, was wiederum sensoriell erfasst werden kann.

Der Erfindung liegt die Aufgabe zugrunde, die Überprüfung einer Siegelnaht bei Pouch-Batteriezellen zu verbessern.

Diese Aufgabe wird erfindungsgemäß gelöst durch ein Verfahren mit den Merkmalen des Anspruchs 1. Außerdem wird diese Aufgabe erfindungsgemäß gelöst durch eine Messvorrichtung mit den Merkmalen des Anspruchs 10. Vorteilhafte und teils für sich erfinderische Ausführungsformen und Weiterentwicklungen der Erfindung sind in den Unteransprüchen und der nachfolgenden Beschreibung dargelegt.

Das erfindungsgemäße Verfahren dient zur Kontrolle einer - vorzugsweise langgestreckten - Siegelnaht einer Pouch-Batteriezelle (kurz: Pouch-Zelle). Üblicherweise weist eine solche Pouch-Zelle einen Elektrodenstapel und einen diesen umschließenden Folienbeutel auf. Der Folienbeutel ist dabei insbesondere zumindest teilweise um den Elektrodenstapel herum mittels der Siegelnaht verschlossen. Bevorzugt ist der Folienbeutel um den Elektrodenstapel herum ringförmig (insbesondere ringförmig geschlossen) geschlossen mittels der Siegelnaht verschlossen.

Verfahrensgemäß wird entlang der Siegelnaht mittels eines ersten Abstandssensors eine Vergleichsgröße ermittelt, die für eine Dicke der Siegelnaht charakteristisch ist. Diese Vergleichsgröße wird auf für Anomalien der Dicke hinweisende Abweichungen überwacht. Für den Fall, dass eine solche Abweichung erkannt wird, wird außerdem eine Warnmeldung ausgegeben.

Charakteristisch bedeutet hier und im Folgenden insbesondere, dass die Vergleichsgröße eine quantitative Information über die Größe der Dicke beinhaltet, so dass sich die Dicke eindeutig aus der Vergleichsgröße ablesen lässt. Die Vergleichsgröße kann hierbei die Größe der jeweiligen Dicke unmittelbar angeben. Alternativ handelt es sich bei der Vergleichsgröße um eine Größe, die zu der anzuzeigenden Dicke direkt oder indirekt proportional ist. Ferner kann die Vergleichsgröße mit der anzuzeigenden Dicke auch in einer nicht-linearen, beispielsweise einer logarithmischen, exponentiellen oder polynomialen (also quadratischen, kubischen, etc.) Beziehung stehen.

Anders ausgedrückt wird die Dicke der Siegelnaht überwacht. Eine anomale, insbesondere signifikante Änderung der Dicke kann dabei ein Hinweis für eine Fehlstelle in der Siegelnaht sein, so dass die Dichtheit des Folienbeutels nicht mehr gewährleistet sein kann. Da es sich bei einer Dickenmessung um eine vergleichsweise einfach und schnell durchzuführende Messung auch ohne aufwendigen Messaufbau handelt, eignet sich das hier und im Folgenden beschriebene Verfahren vorteilhafterweise auch für eine 100 Prozent-Prozessüberwachung.

Besonders bevorzugt wird die Vergleichsgröße mittels des ersten und eines zweiten Abstandssensors (entlang der Siegelnaht) ermittelt.

Bevorzugt wird die Vergleichsgröße für die Dicke der Siegelnaht durch Entlangführen des ersten Abstandssensors, vorzugsweise der beiden Abstandssensoren, und somit durch ein "Abtasten" der Siegelnaht in deren Längsrichtung fortlaufend ermittelt.

In einer bevorzugten Verfahrensvariante werden die beiden Abstandssensoren (d. h. der erste und der zweite Abstandssensor) auf gegenüberliegenden Seiten, insbesondere Flachseiten, der Siegelnaht angeordnet. Vorzugsweise sind die beiden Abstandssensoren während der Messung also auf jeweils einer Flachseite des Folienbeutels angeordnet. Insbesondere werden die beiden Abstandssensoren dabei in Gegenüberstellung, d. h. vorzugsweise mit fluchtenden Messachsen, betrieben. Somit wird also mittels eines jeden Abstandssensors dessen Abstand zum Folienbeutelt ermittelt.

In einer zweckmäßigen Verfahrensvariante wird die Vergleichsgröße - zweckmäßigerweise bei in Gegenüberstellung betriebenen Abstandssensoren - durch die Differenz des Abstands zwischen dem ersten und dem zweiten Abstandssensor und der mittels des ersten und zweiten Abstandssensors ermittelten Abstandsgrößen (d. h. dem Abstand des jeweiligen Abstandssensors zum Folienbeutel) ermittelt. Anders ausgedrückt wird die Summe der Abstandswerte der beiden Seiten der Pouch-Zelle zum jeweils zugeordneten Abstandssensor vom Gesamtabstand zwischen den beiden Sensoren abgezogen. Der dadurch gebildete "Rest" (also die Differenz) ist somit charakteristisch für die Dicke der Siegelnaht und stellt mithin die Vergleichsgröße dar. Alternativ kann auch nur die Differenz der beiden Abstandsgrößen (also zwischen dem jeweiligen Abstandssensor und der Siegelnaht) herangezogen werden. In diesem Fall liegt zwar keine Information über den tatsächlichen Wert der Dicke der Siegelnaht an sich vor. Aber eine Abweichung (insbesondere des aktuellen Werts) der Dicke, bei der vorzugsweise durchgeführten Abtastung der Siegelnaht insbesondere von einem vorhergehenden Wert, wird dennoch durch das Summensignal (konkret die Differenz) der beiden Abstandssensoren erfassbar.

Insbesondere um die gesamt Breite der Siegelnaht "abtasten", also vermessen, zu können, werden in einer vorteilhaften Verfahrensvariante mehrere erste und - falls vorhanden auch - mehrere zweite Abstandssensoren jeweils gruppiert im Rahmen einer ersten und einer zweiten Sensorgruppe eingesetzt. Insbesondere werden die jeweiligen ersten bzw. zweiten Abstandssensoren dabei derart zueinander angeordnet, dass die Siegelnaht über ihre gesamte Breite von der jeweiligen Sensorgruppe erfasst wird. Bspw. werden die jeweiligen Abstandssensoren dabei matrix- oder array-artig, wenigstens mit bündig aneinander anschließenden Messfelder, insbesondere aber mit quer zur Längsrichtung der Siegelnaht überlappenden Messfeldern, angeordnet.

Zusätzlich oder alternativ zu der vorstehend beschriebenen Nutzung mehrerer erster und insbesondere auch mehrerer zweiter Abstandssensoren wird in einer zweckmäßigen Verfahrensvariante die Siegelnaht mehrfach (insbesondere mit den beiden Abstandssensoren) abgetastet. Vorzugsweise wird die Siegelnaht dabei in mehreren parallel zueinander versetzten, optional einander überlappenden oder wenigstens aneinander liegenden, (Mess-) Bahnen abgetastet, vorzugsweise über die gesamte Breite der Siegelnaht. Optional werden bei einer Wiederholung der Abtastung die vorzugsweise in Gegenüberstellung betriebenen Abstandssensoren gegenüber ihrer vorhergehenden Stellung verkippt. Bei einer "normalen" Abtastung wird dagegen die Messachse der beiden Abstandssensoren, bei Gegenüberstellung der Abstandssensoren die gemeinsame Messachse, senkrecht zum Folienbeutel ausgerichtet.

Grundsätzlich ist es im Rahmen der Erfindung denkbar, als Abstandssensor einen vorzugsweise berührungslos messenden Abstandssensor einzusetzen. Denkbar, sind bspw. optische oder kapazitive Sensoren.

In einer bevorzugten Verfahrensvariante wird aber als erster und gegebenenfalls auch als zweiter Abstandssensor jeweils ein Wirbelstrom-Abstandssensor eingesetzt. Dieser hat den Vorteil, dass dieser unsensibel gegen die vorzugsweise vorhandenen Kunststoffschichten der Folie des Folienbeutels und gegebenenfalls reflektierende Eigenschaften dieser ist. Als Vergleichsgröße für die Dicke der Siegelnaht wird in dieser Verfahrensvariante insbesondere der Abstand der beiden jeweils in der Folie enthaltenen (bei mehreren die zur Außenseite hin angeordneten) Aluminiumfolien zueinander ermittelt, insbesondere da die optional vorhandene, außenliegende Kunststoffschicht mittels der Wirbelstrom-Abstandssensoren nicht erfasst wird. Vorzugsweise erfolgt die Ausbildung der Siegelnaht dabei derart, dass die außenliegende Kunststoffschicht der Folie nicht aufgeschmolzen und/oder plastisch verdrängt wird. Vorzugsweise werden beim Siegeln nur die einander berührenden Kunststoffschichten beider Folien aufgeschmolzen. In diesem Fall bleibt die Gesamtdicke der Siegelnaht - oder zumindest des Folienbeutels im Siegelnahtbereich - auch bei der Messung des jeweiligen Wirbelstromsensors auf die Aluminiumfolie durch die Vergleichsgröße zugänglich, da lediglich für jede Folie die regelmäßig bekannte Dicke der außenliegenden Kunststoffschicht aufaddiert zu werden braucht. Andererseits wird die Siegelnaht genau genommen nur durch die beiden sich berührenden Kunststoffschichten ausgebildet. Die Aluminiumfolien und die außenliegenden Kunststoffschichten tragen dabei nichts oder nur zu einem vernachlässigbaren Grad zur Dichtheit und Festigkeit der Verbindungsstelle der beiden sich berührenden Kunststoffschichten bei.

Für den Fall, dass nur ein Abstandssensor (wie vorstehend der erste Abstandssensor) eingesetzt wird, ist dessen Ausführung als Wirbelstromsensor ebenfalls vorteilhaft, da hierbei neben der zugewandten Aluminiumfolie auch - aufgrund von einer "Durchdringung" dieser Aluminiumfolie - die auf der abgewandten Seite angeordnete Aluminiumfolie erfasst wird. Letzteres ist insbesondere zumindest dann der Fall, wenn der Abstand zwischen beiden Aluminiumfolien hinreichend klein ist, was aber im dargestellten Anwendungsfall regelmäßig zutreffend ist. Das von dem nur einen Abstandssensor empfangene Sensorsignal weist dabei bei Variation des Abstands der beiden Aluminiumfolien zueinander ebenfalls eine Signalveränderung auf, anhand der wiederum auf eine Anomalie geschlossen werden kann.

In einer optionalen Weiterbildung der vorstehend genannten Verfahrensvariante wird für die Vergleichsgröße die Dicke der in den beiden aneinander gesiegelten Folien enthaltenen Aluminiumfolien, die dabei vorzugweise als bekannt angesetzt werden, sowie optional auch die Dicke der nach dem Siegeln "innenliegenden", also von den Aluminiumfolien eingeschlossenen Kunststoffschichten berücksichtigt, insbesondere subtrahiert. Das Ergebnis daraus gibt dann zumindest den zwischen den (gegebenenfalls äußersten) Aluminiumfolien eingeschlossenen Spalt wieder. Wird auch die Dicke der innenliegenden Kunststoffschichten abgezogen, liegt eine Information über einen gegebenenfalls verbleibenden "Luftspalt", bspw. an einer Fehlstelle, vor.

Insbesondere da die Kenntnis der verbleibenden Schichtdicke ("Restschichtdicke") der insbesondere thermisch aneinander gesiegelten Kunststoffschicht der beiden Folien für eine Messung mittels der Abstandssensoren nicht zugänglich ist und diese Restschichtdicke insbesondere auch prozesstechnisch vergleichsweise schwierig konstant zu halten sein dürfte, wird vorzugsweise der Abstand der beiden Aluminiumfolien zueinander, gegebenenfalls auch unter Subtraktion der Dicken der Aluminiumfolien - diese bleiben bei der thermischen Siegelung der Kunststoffschichten konstant -, als Vergleichsgröße herangezogen, die dann erkanntermaßen die Restschichtdicke enthält.

Vorzugsweise wird die Vergleichsgröße auf Anomalien überwacht, indem für die Vergleichsgröße eine Obergrenze und optional auch eine Untergrenze vorgegeben werden. Überschreitet die Vergleichsgröße die Ober- oder auch die Untergrenze wird dies dann als Hinweis für das Vorliegen einer Anomalie, insbesondere also für einen Fehler der Siegelnaht herangezogen. Die Formulierung "Grenzwert-Überschreitung" ist hier und im Folgenden grundsätzlich stets richtungsunabhängig in dem Sinne zu verstehen, dass die Differenz der Vergleichsgröße (oder deren räumliche Änderung entlang der Siegelnaht) und des Grenzwerts das Vorzeichen wechselt. Je nach Definition der Vergleichsgröße kann die Überschreitung des jeweiligen Grenzwerts positiv (im Sinne einer echten Überschreitung, bei der die Vergleichsgröße größer wird als der Grenzwert) oder negativ (im Sinne einer Unterschreitung, bei der die Vergleichsgröße kleiner wird als der Schwell- oder Grenzwert) sein. Vorzugsweise sind aber die Obergrenze und die Untergrenze derart gelegt, dass die Vergleichsgröße, insbesondere deren Wert, im bestimmungsgemäßen oder "korrekten" Fall kleiner als die Obergrenze und größer als die Untergrenze ist.

Bei einer (insbesondere "echten") Unterschreitung der Untergrenze kann es beispielsweise dazu kommen, dass die Restschichtdicke zwischen den Aluminiumfolien gegen Null geht, so dass die gegebenenfalls verbleibende (verschweißte) Kunststofflage womöglich vollständig aus dem Spalt zwischen den Aluminiumfolien verdrängt wurde, so dass eine dichte Anhaftung der Aluminiumfolien aneinander in diesem Bereich nicht mehr gegeben sein kann. Ein (insbesondere "echtes") Überschreiten der Obergrenze deutet bspw. auf eine unvollständige Siegelung in diesem Bereich hin, bspw. aufgrund einer eingeschlossenen Blase oder eines Fremdkörpers. In diesem Fall kann eine Siegelung, also eine thermische Verbindung der Kunststoffschichten in diesem Bereich gar nicht erfolgt sein.

Beispielsweise sind die Ober- und Untergrenzen empirisch ermittelt und insbesondere als Absolutwerte vorgegeben. Beispielsweise beträgt die Obergrenze das Doppelte einer Kunststoffschichtdicke abzüglich eines beim Ausbilden einer Siegelnaht typischen - insbesondere vom eingesetzten Kunststoff und/oder der Siegeltemperatur abhängigen - "Siegelhubs".

Zusätzlich oder optional auch alternativ werden in einer weiteren zweckmäßigen Verfahrensvariante aber auch relative, d. h. nicht auf einen Absolutwert bezogene, Grenzen für die Vergleichsgröße ermittelt. Bspw. wird bei einer Abtastung der Siegelnaht entlang ihrer Länge ein gleitender Mittelwert (oder eine Vergleichbare Größe) ermittelt, für den wiederum ein fester Abweichungsbereich, bspw. +/- 5 Prozent, vorgegeben wird. Dadurch können auch innerhalb der Ober- und Untergrenzen liegende Abweichungen, die aber auf eine Anomalie, bspw. einen Einschluss, eine Verschmutzung, die zu einer Undichtigkeit führen kann, erkannt werden. Zusätzlich kann eine solche relative Grenze aber auch in Bezug auf die absoluten Ober- und Untergrenzen angepasst werden. So kann die vorstehend genannte beispielhafte Grenze von 5 Prozent des gleitenden Mittelwerts einseitig zu dem Mittelwert verringert werden, wenn der Mittelwert sich an dieser Seite an die absolute Ober- oder Untergrenze annähert. Bspw. ist es denkbar, dass, wenn der Abstand des Mittelwerts zur Obergrenze 6 oder 7 Prozent des Mittelwerts beträgt, die relative obere Grenze auf 3 Prozent reduziert wird.

Da das hier beschriebene Verfahren vorteilhafterweise eine vergleichsweise einfach und auch innerhalb kurzer Prozesszeiten durchführbare Möglichkeit zur Kontrolle der Siegelnähte darstellt, wird dieses Verfahren, insbesondere also die Ermittlung der Vergleichsgröße und deren Überwachung auf eine Anomalie der Dicke der Siegelnaht, in einer vorteilhaften Verfahrensvariante inline während einer Herstellung der Pouch-Zelle durchgeführt.

Somit ist insbesondere auch ein Herstellungs- oder Fertigungsverfahren für Pouch-Zellen der eingangs beschriebenen Art Gegenstand der Erfindung. Bei diesem Herstellungs- oder Fertigungsverfahren wird dann nach dem Siegelschritt, d. h. nach dem Versiegeln des Folienbeutels, das vorstehend beschriebene Verfahren, vorzugsweise selbsttätig, insbesondere also automatisiert bspw. mittels einer entsprechenden Messvorrichtung, durchgeführt.

Die erfindungsgemäße Messvorrichtung weist einen ersten, und vorzugsweise auch einen zweiten, Abstandssensor auf, der bzw. die an einer Sensorhalterung angeordnet sind. Die Sensorhalterung oder alternativ eine Messobjekthalterung, die optional Teil der Messvorrichtung ist, sind mittels eines Antriebs relativ zueinander bewegbar. Außerdem weist die Messvorrichtung einen Controller auf, der zur Durchführung des vorstehend beschriebenen Verfahrens, insbesondere zur Erfassung und Auswertung der Sensorsignale des bzw. der Abstandssensoren, eingerichtet ist.

Die Messobjekthalterung kann optional auch eine Halterung für die Pouch-Zelle während des Herstellungsprozesses sein. Im Rahmen des hier beschriebenen Verfahrens bildet die Messobjekthalterung in diesem Fall zumindest für den Zeitraum der Durchführung des Verfahrens vorzugsweise einen Teil der Messvorrichtung.

Bei dem Antrieb handelt es sich in einer optionalen Ausführung um einen Industrieroboter, der die Sensorhalterung relativ zu der Pouch-Zelle bewegt.

In zweckmäßigen Weiterbildungen weist die Messvorrichtung die im Rahmen des Verfahrens beschrieben körperlichen Merkmale entsprechend auf, bspw. also die Mehrzahl von ersten und zweiten Abstandssensoren, deren Ausbildung durch Wirbelstrom-Abstandssensoren und dergleichen. Somit teilt sich die Messvorrichtung die Vorteile mit dem erfindungsgemäßen Verfahren.

Der Controller kann im Rahmen der Erfindung als nicht-programmierbare elektronische Schaltung ausgebildet sein und hierbei beispielsweise in eine Steuerung einer Fertigungsanlage für die Pouch-Zellen integriert sein. Vorzugsweise ist der Controller aber durch einen Mikrocontroller gebildet, in dem die Funktionalität zur Durchführung des erfindungsgemäßen Verfahrens in Form eines Softwaremoduls implementiert ist. Dieses Softwaremodul kann hierbei wiederum optional einen Bestandteil einer übergreifenden Steuersoftware eines Controllers der vorstehend beschriebenen Fertigungsanlage bilden.

Die Konjunktion "und/oder" ist hier und im Folgenden insbesondere derart zu verstehen, dass die mittels dieser Konjunktion verknüpften Merkmale sowohl gemeinsam als auch als Alternativen zueinander ausgebildet sein können.

Nachfolgend wird ein Ausführungsbeispiel der Erfindung anhand einer Zeichnung näher erläutert. Darin zeigen:
- Fig. 1: in einer perspektivischen Teilschnittdarstellung schematisch eine Messvorrichtung zur Kontrolle von Siegelnähten an Pouch-Batteriezellen und einen Teil einer solchen Pouch-Batteriezelle im bestimmungsgemäßen Messablauf, und
- Fig. 2: in einer Seitenansicht eine schematische Prinzipdarstellung des Messablaufs.

Einander entsprechende Teile und Größen sind in allen Figuren stets mit gleichen Bezugszeichen versehen.

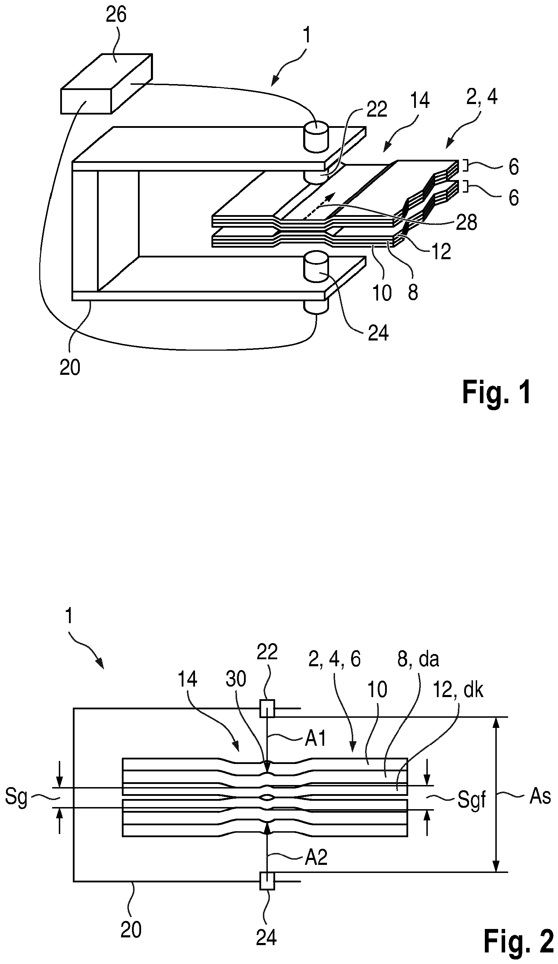

In Fig. 1 ist schematisch eine Messvorrichtung 1 dargestellt, die zur Inline-Prozesskontrolle bei der Herstellung einer Pouch-Batteriezelle, kurz "Pouch-Zelle 2", eingerichtet und vorgesehen ist. Die Pouch-Zelle 2 umfasst einen nicht dargestellten Elektrodenstapel sowie einen, ein mediendichtes Gehäuse für den Elektrodenstapel bildenden, Folienbeutel 4. Der Folienbeutel 4 ist aus zwei laminierten Folien 6 gebildet, die optional zur Ausformung einer "Tasche" für den Elektrodenstapel tiefgezogen sind. Die Folien 6 bilden also jeweils eine Halbschale, aus denen dann der Folienbeutel 4 gebildet wird. Die Folien 6 sind im dargestellten Ausführungsbeispiel aus je einer Aluminiumfolie 8 gebildet, die beidseitig, also sandwichartig mit jeweils einer Kunststoffschicht, konkret einer Oberschicht 10 und einer Unterschicht 12 laminiert sind.

Zur Bildung des Folienbeutels 4 wird der Elektrodenstapel zwischen die beiden Folien 6 eingelegt. Diese werden um den Elektrodenstapel umlaufend geschlossen miteinander verbunden, konkret miteinander thermisch versiegelt. Die dabei gebildete Fügezone wird auch als Siegelnaht 14 bezeichnet. Konkret werden die beiden Folien 6 unter Wärmeeinwirkung aufeinander gedrückt, so dass die aneinander anliegenden Kunststoffschichten, hier die Unterschicht 12 lokal aufschmelzen und sich miteinander verbinden, konkret verschweißen. Deshalb wird die Unterschicht 12 optional auch als "Siegelschicht" bezeichnet. In den Folienbeutel 4 wird außerdem ein flüssiges Elektrolyt eingebracht.

In einem optionalen Ausführungsbeispiel sind die Unterschichten 12 aus einem niedrig-schmelzenderen Kunststoff gebildet als die Oberschichten 10.

Um nun die Siegelnaht 14 einfach und während des Fertigungsprozesses der Pouch-Zelle 2 zu 100 Prozent, also jeder erstellte Siegelnaht 14, auf Fehlstellen überprüfen zu können - dies ist vorteilhaft, um die Gefahr des Austritts des flüssigen Elektrolyts aus der Pouch-Zelle 2 erkennen zu können - wir das im Folgenden unter anderem anhand von Fig. 2 näher beschriebene Verfahren mittels der Messvorrichtung 1 durchgeführt. Dabei wird grundsätzlich eine Vergleichsgröße ermittelt, die charakteristisch für die Dicke der Siegelnaht 14 ist, und diese Vergleichsgröße auf anomale Abweichungen hin untersucht, die dann als Hinweis auf eine Fehlstelle in der Siegelnaht 14 herangezogen werden.

Die Messvorrichtung 1 umfasst eine gabelartige Sensorhalterung 20 sowie einen ersten Abstandssensor (kurz: "Sensor 22") und einen zweiten Abstandssensor (kurz: "Sensor 24"), die an der Sensorhalterung 20 in Gegenüberstellung gehaltert sind. Die beiden Sensoren 22 und 24 sind jeweils durch einen Wirbelstrom-Abstandssensor gebildet, der dazu eingerichtet ist, den Abstand zwischen sich und einem Objekt, konkret einem metallischen Objekt, zu messen. Außerdem umfasst die Messvorrichtung 1 einen Controller 26, auf den die beiden Sensoren 22 und 24 aufgeschaltet sind und der dazu eingerichtet ist, die Sensorsignale der beiden Sensoren 22 und 24 auszuwerten.

Die Messvorrichtung 1 wird bei der Durchführung des Verfahrens zur Kontrolle der Siegelnaht 14 dieser folgend derart bewegt, dass eine "Messbahn 28" oder Messlinie auf der Siegelnaht 14 liegt und parallel zu dieser ausgerichtet ist. Auf dieser Messbahn 28 erfolgt die Messung oder "Abtastung" der Siegelnaht 14. Mithin liegen die mittels der Sensoren 22 und 24 durchgeführten Messungen (also die einzelnen Messpunkte) auf der jeweils zugeordneten Messbahn 28.

Da die Sensoren 22 und 24 als Wirbelstromsensoren für die Oberschicht 10 der jeweiligen Folie 6 "blind" oder unsensibel sind, erfolgt eine Abstandsmessung auf die jeweilige Aluminiumfolie 8. Der erste Sensor 22 gibt also ein Sensorsignal aus, das charakteristisch für den ersten Abstand A1 zwischen sich und der ihm zugewandten (im Bild oberen) Aluminiumfolie 8 ist (s. Fig. 2). Der zweite Sensor 24 gibt entsprechend ein Sensorsignal aus, das charakteristisch für den zweiten Abstand A1 zwischen sich und der im Bild unteren Aluminiumfolie 8 ist.

In einer optionalen Verfahrensvariante wird bereits die Summe der beiden Abstände A1 und A2 (oder auch deren Differenz) als Vergleichsgröße für die Dicke der Siegelnaht 14 herangezogen. Bleibt diese Summe zumindest innerhalb vorgegebener Grenzen konstant, kann auch ohne Kenntnis der tatsächlichen Dicke der Siegelnaht 14 überwacht werden, ob eine anomale Veränderung vorliegt.

Um Kenntnis über die Dicke der Siegelnaht 14 zu erlangen, werden die Abstände A1 und A2 vom Abstand As zwischen den beiden Sensoren 22 und 24 (konkret durch den Controller 26) abgezogen. Der Abstand As ist bekannt und/oder wurde durch eine Messung mittels zumindest eines der beiden Sensoren 22 und 24 ohne dazwischen liegendes Messobjekt ermittelt. Die aus der Differenz des Abstands As und den Abständen A1 und A2 resultierende Größe gibt die Dicke des Folienbeutels 4 im Bereich der Siegelnaht 14 abzüglich der beiden Oberschichten 10 der Folien 6 wieder. Diese Größe wird in einer Variante als Vergleichsgröße für die Dicke der Siegelnaht 14 herangezogen. Optional werden davon auch noch die jeweiligen Dicken da der Aluminiumfolien 8 abgezogen. Hierdurch liegt als Vergleichsgröße eine Spaltgröße Sg zwischen den Aluminiumfolien 8 vor. Diese wird bestimmt durch die Formierung der beiden Unterschichten 12 unter Wärme und Druck. Im bestimmungsgemäßen Siegelzustand beträgt die Spaltgröße Sg weniger als die Summe aus den Dicken dk beider Unterschichten 12.

Die Spaltgröße Sg wird dann mit einer Obergrenze, d. h. einem oberen Grenzwert oder Maximalwert, und einer Untergrenze, d. h. einem unteren Grenzwert oder Minimalwert vergleichen. Wird der Maximalwert über- oder der Minimalwert von der Spaltgröße Sg unterschritten, wird durch den Controller 26 eine Warnmeldung ausgegeben und/oder die aktuell geprüfte Pouch-Zelle 2 als fehlerhaft markiert.

In Fig. 2 ist beispielhaft eine Spaltgröße Sgf aufgrund einer ungesiegelten Fehlstelle 30, konkret einer lokal ausgeprägten Blase in der Siegelnaht 14, dargestellt. An dieser Fehlstelle 30 überschreitet die Spaltgröße Sgf im vorliegenden Ausführungsbeispiel den Maximalwert und wird somit durch den Controller 2 als Fehler erkannt und gemeldet.

Da die beiden Sensoren 22 und 24 in Gegenüberstellung arbeiten, bleibt die Summe oder die Differenz der ersten und zweiten Abstände A1 und A2 - zumindest bei gleichbleibender Dicke der Siegelnaht 14 - kontant, auch wenn die Sensorhalterung 20 entlang der Messachse der beiden Sensoren 22 und 24 relativ zur Pouch-Zelle 2 verschoben wird. Dadurch kann vorteilhafterweise als Antrieb für die Verschiebung der Sensorhalterung 20 entlang der Messbahn 28 ein Industrieroboter oder dergleichen genutzt werden, insbesondere also ein Gerät mit vergleichsweise geringer Positionsgenauigkeit.

Der Gegenstand der Erfindung ist nicht auf die vorstehend beschriebenen Ausführungsbeispiele beschränkt. Vielmehr können weitere Ausführungsformen der Erfindung von dem Fachmann aus der vorstehenden Beschreibung abgeleitet werden. Insbesondere können die anhand der verschiedenen Ausführungsbeispiele beschriebenen Einzelmerkmale der Erfindung und deren Ausgestaltungsvarianten auch in anderer Weise miteinander kombiniert werden.

### Bezugszeichenliste

- 1: Messvorrichtung
- 2: Pouch-Zelle
- 4: Folienbeutel
- 6: Folie
- 8: Aluminiumfolie
- 10: Oberschicht
- 12: Unterschicht
- 14: Siegelnaht
- 20: Sensorhalterung
- 22: Sensor
- 24: Sensor
- 26: Controller
- 28: Messbahn
- 30: Fehlstelle

- As: Abstand
- A1: Abstand
- A2: Abstand
- da: Dicke
- dk: Dicke
- Sg: Spaltgröße
- Sgf: Spaltgröße

## Patentansprüche

1. Verfahren zur Kontrolle einer Siegelnaht (14) einer Pouch-Batteriezelle (2), wobei verfahrensgemäß
- entlang der Siegelnaht (14) mittels eines ersten Abstandssensors (22, 24) eine Vergleichsgröße (Sg), die für eine Dicke der Siegelnaht (14) charakteristisch ist, ermittelt wird,
- die Vergleichsgröße (Sg) auf für Anomalien der Dicke charakteristische Abweichungen überwacht wird, und
- im Fall einer solchen Abweichung eine Warnmeldung ausgegeben wird.

2. Verfahren nach Anspruch 1,
wobei die Vergleichsgröße (Sg) entlang der Siegelnaht (14) mittels des ersten und eines zweiten Abstandssensors (22, 24) ermittelt wird.

3. Verfahren nach Anspruch 2,
wobei die zwei Abstandssensoren (22, 24) auf gegenüberliegenden Seiten der Siegelnaht (14) angeordnet werden, insbesondere wobei die zwei Abstandssensoren (22, 24) in Gegenüberstellung betrieben werden.

4. Verfahren nach Anspruch 3,
wobei die Vergleichsgröße (Sg) durch die Differenz eines Abstands (As) zwischen dem ersten und dem zweiten Abstandssensor (22, 24) und von mittels des ersten und zweiten Abstandssensors (22,24) ermittelten Abstandsgrößen (A1, A2), vorzugsweise abzüglich jeweils einer Dicke (da) einer Aluminiumfolie (8) der den Folienbeutel (4) bildenden Laminatfolie (4), ermittelt wird.

5. Verfahren nach einem der Ansprüche 1 bis 4,
wobei mehrere erste und gegebenenfalls mehrere zweite Abstandssensoren (22, 24) jeweils gruppiert zu einer ersten bzw. einer zweiten Sensorgruppe eingesetzt werden, wobei die ersten bzw. zweiten Abstandssensoren (22, 24) in ihrer jeweiligen Sensorgruppe derart zueinander angeordnet sind, dass die Siegelnaht (14) über ihre gesamte Breite von der jeweiligen Sensorgruppe erfasst wird.

6. Verfahren nach einem der Ansprüche 1 bis 5,
wobei die Siegelnaht (14) mehrfach mit dem ersten Abstandssensor (22, 24) oder gegebenenfalls den beiden Abstandssensoren (22, 24), insbesondere entlang zueinander versetzten Messbahnen (28), abgetastet wird.

7. Verfahren nach einem der Ansprüche 1 bis 6,
wobei als erster und als gegebenenfalls vorhandener zweiter Abstandssensor (22, 24) jeweils ein Wirbelstromsensor eingesetzt wird.

8. Verfahren nach einem der Ansprüche 1 bis 7,
wobei für die Vergleichsgröße (Sg) eine Obergrenze, optional auch eine Untergrenze, für die Erkennung von Anomalien, insbesondere empirisch, vorgegeben werden.

9. Verfahren nach einem der Ansprüche 1 bis 8,
wobei die Ermittlung der Vergleichsgröße (Sg) inline während einer Herstellung der Pouch-Batteriezelle (2) durchgeführt wird.

10. Messvorrichtung (1) mit einem ersten, und vorzugsweise einem zweiten, Abstandssensor (22, 24), der bzw. die an einer Sensorhalterung (20) angeordnet sind, wobei die Sensorhalterung (20) oder eine Messobjekthalterung mittels eines Antriebs bewegbar ist, und mit einem Controller (26), der zur Durchführung des Verfahrens nach einem der Ansprüche 1 bis 9 eingerichtet ist.
